# EUROPÄISCHE PATENTSCHRIFT

(11) **EP 2 859 319 B1**
(45) Veröffentlichungstag und Bekanntmachung des Hinweises auf die Patenterteilung: **22.06.2016**
(21) Anmeldenummer: 13722682.5
(22) Anmeldetag: 14.05.2013
(51) Int. Cl.: G01N 1/06

(54) **MIKROTOM**
MICROTOME
MICROTOME

(30) Priorität: 06.06.2012 DE 102012011201
(43) Veröffentlichungstag der Anmeldung: 15.04.2015
(73) Patentinhaber: Microm International GmbH, 63303 Dreieich (DE)
(72) Erfinder: JOHE, Roland, 69412 Eberbach (DE)
(74) Vertreter: Lichti - Patentanwälte Partnerschaft mbB
(86) Internationale Anmeldenummer: PCT/EP2013/001411
(87) Internationale Veröffentlichungsnummer: WO 2013/182267

(56) Entgegenhaltungen:
- EP-A2- 1 037 033
- DE-U1-202006 008 329
- US-A- 5 535 654
- US-A1- 2004 178 371

## Beschreibung

Die Erfindung betrifft ein Mikrotom mit einer Schneideeinrichtung, die auf einer Anordnung von Führungsschienen verstellbar montiert ist, wobei an der Schneideeinrichtung wenigstens ein elektrischer Verbraucher vorgesehen ist, der mit einer Stromquelle elektrisch verbunden ist.

Mikrotome dienen zum Schneiden von dünnen Schnittpräparaten, insbesondere empfindlichen Gewebeproben, die unter dem Mikroskop untersucht werden sollen. Üblicherweise weisen Mikrotome eine Schneideeinrichtung mit einem aus-wechselbaren Messer oder einer Klinge sowie einen Proben-halter für eine zu schneidende Probe auf.

Biologisches Material wird vor dem Schneiden durch Fixierung gehärtet und dann durch Einschluss in einer flüssigen Substanz wie Paraffin oder Kunstharz, die transparent aushärtet, schneidbar gemacht. Das Schneiden der Probe erfolgt mittels des Messers, indem die auf dem Probenhalter sitzende Probe mittels eines Vorschub-mechanismus relativ zu dem Messer bewegt wird, um einen durchgängigen Schnitt durch die Probe zu erhalten.

Um zusätzliche Funktionen, wie zum Beispiel eine Beleuchtung oder einen automatisierten Messerwechsel in einen Messerhalter zu integrieren, ist es notwendig, eine elektrische Energieversorgung anzuschließen. Dies wird im Stand der Technik mittels eines Anschlusssteckers realisiert. Während der Benutzung kommt es jedoch häufig vor, dass dieser Anschlussstecker durch Paraffinreste verunreinigt wird und damit keine elektrische Verbindung mehr gewährleistet ist. Zudem muss der Stromanschluss-stecker jedes Mal, wenn der Messerhalter vom Mikrotom abgenommen wird, aus dem Anschluss herausgezogen bzw. wieder eingesteckt werden. Dies hat zusätzliche Handgriffe und Zeitverlust für einen Benutzer zur Folge.

Die DE 20 2006 008329 U1 (Leica Microsystems Nussioch GmbH) stellt ein Mikrotom des Stands der Technik dar.

Der Erfindung liegt daher die Aufgabe zu Grunde, ein Mikrotom bereitzustellen, bei dem ein elektrischer Verbraucherautomatisch an eine elektrische Energieversorgung angeschlossen wird.

Die Aufgabe wird erfindungsgemäß durch ein Mikrotom mit den Merkmalen des Anspruchs 1 gelöst. Dabei ist vorgesehen, dass die Stromquelle über die Anordnung von Führungsschienen mit dem elektrischen Verbraucher verbunden ist.

Der erfindungsgemäße Anschluss eines elektrischen Verbrauchers an ein Mikrotom ist grundsätzlich in Verbindung mit diesem beschrieben, jedoch ist die Erfindung darauf nicht beschränkt, da die Erfindung auch bei anderen Laborgeräten einsetzbar ist.

Insbesondere sieht die Erfindung vor, dass der Messerhalter insbesondere über einen Lagerblock auf einer Anordnung von Führungsschienen als Tragkonstruktion montiert ist, die mit der Stromquelle verbunden ist. Die Anordnung von Führungsschienen kann wenigstens zwei Führungsschienen aufweisen, die parallel und auf Abstand zueinander verlaufen und aus dem Mikrotom nach vorne ragen. Der Messerhalter bzw. der Lagerblock kann längs der Führungsschienen stufenlos verstellt werden, wobei der Messerhalter bzw. der Lagerblock stets in Kontakt mit den Führungsschienen ist.

In bevorzugter Ausgestaltung der Erfindung sind wenigstens zwei Führungsschienen vorgesehen, wobei jeweils eine Führungsschiene als elektrischer Leiter verwendbar ist. Die Führungsschienen sind hierzu aus Metall gefertigt. Auch kann vorgesehen sein, dass auf den wenigstens zwei Führungsschienen jeweils wenigstens eine elektrische Kontaktfläche angeordnet ist. Die Kontaktflächen auf den Führungsschienen können längs entlang der Oberfläche ausgebildet sein oder auch seitlich angebracht sein, je nachdem in welchem Bereich der Messerhalter bzw. der Lagerblock an den Führungsschienen eingreift. Dabei sieht die Erfindung vor, dass an dem Messerhalter bzw. dem Lagerblock ein Kontaktbereich angeordnet sein kann, der mit wenigstens einer der Führungsschienen bzw. deren Kontaktflächen in elektrischem Kontakt stehen kann, wenn der Messerhalter bzw. der Lagerblock montiert ist. Hierzu kann der Messer-halter bzw. der Lagerblock elektrische Kontakte an ihren Auflageflächen zu den Führungsschienen besitzen oder aus Metall gefertigt sein.

Die Erfindung sieht besonders bevorzugt vor, dass die Stromversorgung über die Führungsschienen geführt ist, indem zwischen den Führungsschienen eine Spannungsdifferenz, insbesondere eine Niederspannungsdifferenz herrscht. Diese Spannungsdifferenz kann verwendet werden, um wenigstens einen an der Schneideeinrichtung befindlichen elektrischen Verbraucher zu versorgen. Die Spannungs-differenz wird bei Vorhandensein von abgegrenzten Kontakt-flächen auf den Führungsschienen entsprechend an die Kontaktflächen angelegt.

Bei dem elektrischen Verbraucher kann es sich beispielsweise um eine Beleuchtungseinrichtung und/oder eine Kühlvorrichtung und/oder eine Heizungsvorrichtung für die Schneideeinrichtung handeln. Gegebenenfalls können auch ein Antrieb für einen Sicherheitsbügel oder weitere derartige Vorrichtungen am Mikrotom und insbesondere am Messerhalter als elektrischer Verbraucher vorgesehen sein. Besonders bevorzugt kann der wenigstens eine elektrische Verbraucher in den wenigstens einen Messerhalter integriert sein. Auch eine Anordnung in einem anderen Teil des Mikrotoms ist denkbar, z.B. einer Abfallschale oder eine lösbar verbundenen Ablagefläche neben bzw. unterhalb der Schneideeinrichtung.

Ferner sieht die Erfindung bevorzugt vor, dass die Stromquelle innerhalb des Mikrotoms angeordnet ist und vorzugsweise Teil eines Spannungsnetzteils innerhalb des Mikrotoms ist. Durch die Nutzung des internen Spannungs-netzteils ist eine kompakte Bauweise gewährleistet und es ist kein weiterer Stromanschluss für den wenigstens einen elektrischen Verbraucher notwendig.

Bevorzugt kann die Stromversorgung über die Anordnung von Führungsschienen auch zum Anschluss von Steuerungselementen für den elektrischen Verbraucher genutzt werden. Hierbei können bestehende Steuerungselemente verwendet werden oder neue vorgesehen sein, die mit einer Steuerung des Mikrotoms verbunden sind. Ein Benutzer muss keine zusätzlichen Handgriffe mehr ausführen, sondern kann über die Steuerung am Mikrotom die eingebauten elektrischen Verbraucher schnell und einfach verwenden.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine schematische Darstellung eines erfindungsgemäßen Mikrotoms und
- Fig. 2: eine schematische Schaltungsanordnung für ein erfindungsgemäßes Mikrotom.

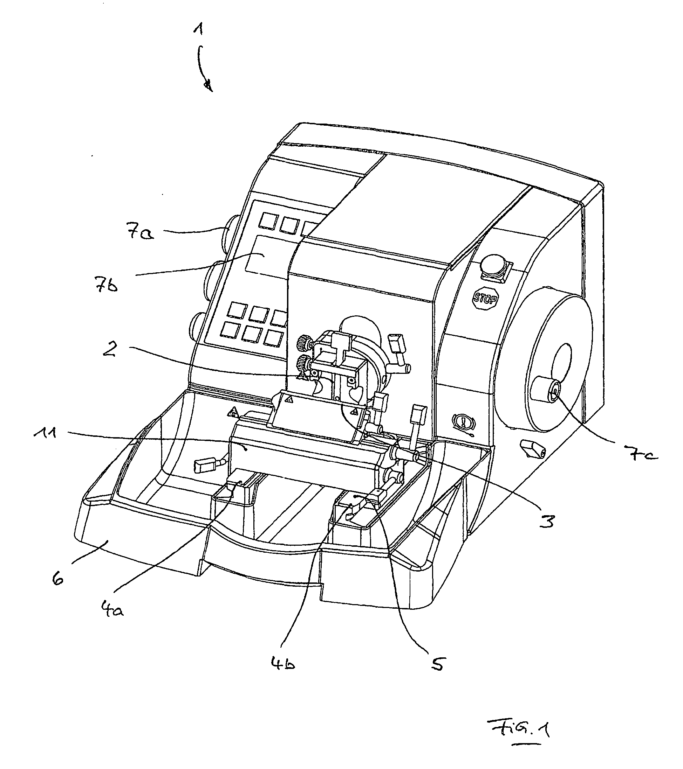

In der Fig. 1 ist ein Mikrotom 1 dargestellt, das eine Schneideeinrichtung mit einem Probenhalter 2 und einem davor angeordneten Messerhalter 3 aufweist. Der Messerhalter 3 ist auf einem Lagerblock 11 montiert, der auf einer Anordnung von Führungsschienen mit zwei zueinander parallelen Führungsschienen 4a, 4b sitzt. Die Führungs-schienen 4a, 4b weisen elektrische Kontaktflächen 5 auf, mit denen der Lagerblock 11 in elektrischem Kontakt steht. Zusätzlich können am Lagerblock 11 unterseitig elektrische Kontakte angeordnet sein und/oder der Lagerblock 11 kann aus Metall gefertigt sein. Die Kontaktflächen 5 auf den Führungsschienen 4a,4b sind längs entlang der Oberfläche ausgebildet. Sie können auch seitlich angebracht sein, je nachdem in welchem Bereich der Lagerblock 11 an den Führungsschienen 4a, 4b eingreift.

Ferner ist am Mikrotom 1 eine abnehmbare Ablage 6 mit einer Abfallschale angeordnet. Verschiedene Steuerelemente 7a, 7b, 7c, wie z.B. mehrere Regler und ein Display ermöglichen Einstellungen bezüglich des Probenhalters 2, des Messerhalters 3 sowie weiterer elektrisch verbundener Teile am Mikrotom 1.

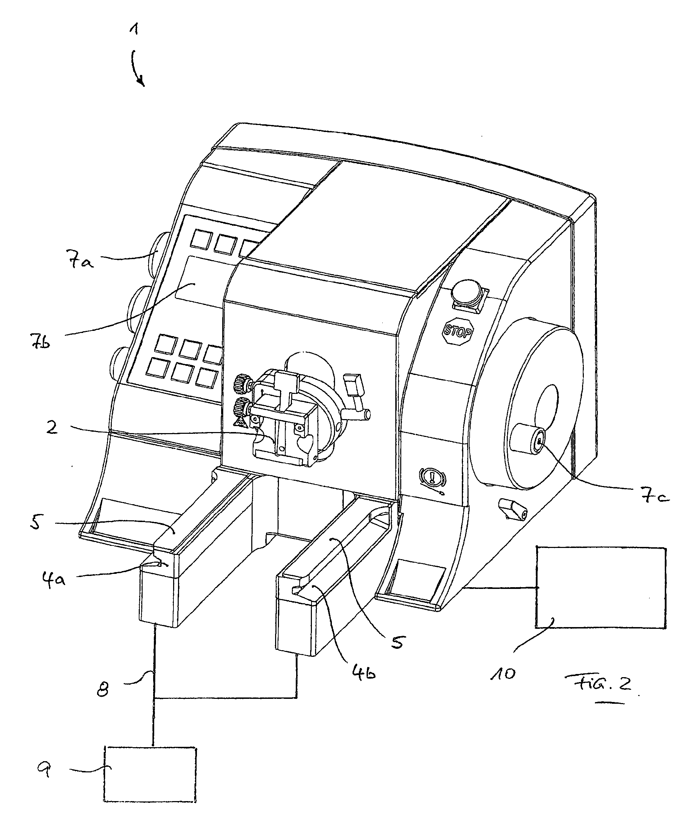

Die Fig. 2 zeigt ferner ein erfindungsgemäßes Mikrotom 1 in einer schematischen Schaltungsanordnung. Der Lagerblock 11 mit dem Messerhalter 3 und die Ablage 6 sind hierbei zur besseren Übersicht abgenommen. Die Führungsschienen 4a, 4b sind mittels eines elektrischen Leiters 8, der in den Messerblock 11 integriert ist, mit einem elektrischen Verbraucher 9 elektrisch verbunden. Ferner sind die Führungsschienen 4a, 4b in einem mikrotom-internen Schaltkreis mit einer Stromquelle 10 verbunden. Der elektrische Verbraucher 9 ist somit über die Führungsschienen 4a, 4b mit der Stromquelle 10 elektrisch verbunden. Die Strom-quelle 10 ist weiterhin mit den Steuerungselementen 7a,7b,7c verbunden, wodurch der elektrische Verbraucher 9 über die Steuerungselemente 7a,7b,7c steuerbar ist.

Mittels der Stromquelle 10 wird an die Führungsschienen 4a, 4b eine Spannungsdifferenz angelegt. Vorzugsweise handelt es sich dabei um eine Niederspannungsdifferenz, wobei beispielsweise an der einen Führungsschiene 4a die Spannung von 0 V und an der anderen Führungsschiene 4b eine Spannung von ca. 5 V angelegt wird. Der Wert der angelegten Spannung bemisst sich nach dem anzuschließenden elektrischen Verbraucher 9.

Der elektrische Verbraucher 9 ist in dieser Ausgestaltung in den Lagerblock 11 oder den Messerhalter 3 integriert. Der Messerhalter 3 kann zum Beispiel eine integrierte Beleuchtung als elektrischer Verbraucher 9 aufweisen. Eine solche Beleuchtung wird über den elektrischen Kontakt zwischen dem Lagerblock 11 und den Führungsschienen 4a, 4b an den Stromkreis im Mikrotom 1 und damit an die Stromquelle 10 angeschlossen. Vom Benutzer zusätzlich manuell zu verbindende Kabel, die einen elektrischen Verbraucher 9 mit Strom versorgen, sind nicht mehr nötig. Die Stromversorgung ist allein über die Führungsschienen 4a, 4b gewährleistet. Darüber ist der elektrische Verbraucher 9 mit den Steuerelementen 7a, 7b, 7c am Mikrotom 1 steuerbar. Dies erleichtert die Handhabung der zusätzlichen Komponenten am Mikrotom 1.

## Patentansprüche

1. Mikrotom mit einer Schneideeinrichtung, die auf einer Anordnung von Führungsschienen (4a, 4b) verstellbar moniert ist, wobei an der Schneideeinrichtung wenigstens ein elektrischer Verbraucher (9) vorgesehen ist, der mit einer Stromquelle (10) elektrisch verbunden ist wobei, die Stromquelle (10) über die Anordnung von Führungsschienen (4a, 4b) mit dem elektrischen Verbraucher (9) ver-bunden ist, **dadurch gekennzeichnet, dass** die Anordnung von Führungsschienen wenigstens zwei parallel zueinander verlaufende Führungsschienen (4a, 4b) aufweist und wobei zwischen den wenigstens zwei Führungsschienen (4a, 4b) eine Spannungsdifferenz anlegbar ist.

2. Mikrotom nach Anspruch 1, **dadurch gekennzeichnet, dass** auf den wenigstens zwei Führungsschienen (4a, 4b) jeweils wenigstens eine elektrische Kontaktfläche (5) angeordnet ist.

3. Mikrotom nach Anspruch 1 oder 2, **dadurch gekennzeichnet, dass** an der Schneideeinrichtung wenigstens ein Kontaktbereich angeordnet ist, der mit den Führungsschienen (4a, 4b) in elektrischem Kontakt steht.

4. Mikrotom nach einem der Ansprüche 1 bis 3, **dadurch gekennzeichnet, dass** der wenigstens eine elektrische Verbraucher (9) eine Beleuchtungseinrichtung und/oder eine Kühlvorrichtung und/oder eine Heizungsvorrichtung und/oder ein elektrischer verstellbarer Sicherheitsbügel ist.

5. Mikrotom nach einem der Ansprüche 1 bis 4, **dadurch gekennzeichnet, dass** die Schneideeinrichtung wenigstens einen Probenhalter (2) und wenigstens einen Messerhalter (3) aufweist.

6. Mikrotom nach Anspruch 5, **dadurch gekennzeichnet, dass** der wenigstens eine elektrische Verbraucher (9) in dem wenigstens einen Messerhalter (3) angeordnet ist.

7. Mikrotom nach einem der Ansprüche 1 bis 6, **dadurch gekennzeichnet, dass** die Stromquelle innerhalb des Mikrotoms angeordnet ist.

8. Mikrotom nach Anspruch 7, **dadurch gekennzeichnet, dass** die Stromquelle (10) Teil eines Spannungsnetzteils innerhalb des Mikrotoms (1) ist.

## Claims

1. Microtome with a cutting device, which is adjustably mounted on an array of guide tracks (4a, 4b), whereby at least one electrical consumer (9), which is electrically connected with a current source (10), is provided at the cutting device whereby the current source (10) is connected with the electrical consumer (9) via the array of guide tracks (4a, 4b), **characterized in that** the array of guide tracks has at least two guide tracks (4a, 4b) running parallel to one another, and whereby a voltage difference can be applied between the at least two guide tracks (4a, 4b).

2. Microtome in accordance with claim 1, **characterized in that** at least one electrical contact surface (5) each is arranged on the at least two guide tracks (4a, 4b).

3. Microtome in accordance with one of the claim 1 or 2, **characterized in that** at least one contact area, which is in electrical contact with the guide tracks (4a, 4b), is arranged at the cutting device.

4. Microtome in accordance with one of the claims 1 through 3, **characterized in that** the at least one electrical consumer (9) is an illuminating device and/or a cooling device and/or a heating device and/or an electrically adjustable safety strap.

5. Microtome in accordance with one of the claims 1 through 4, **characterized in that** the cutting device has at least one specimen holder (2) and at least one knife holder (3).

6. Microtome in accordance with claim 5, **characterized in that** the at least one electrical consumer (9) is arranged in the at least one knife holder (3).

7. Microtome in accordance with one of the claims 1 through 6, **characterized in that** the current source is arranged within the microtome.

8. Microtome in accordance with claim 7, **characterized in that** the current source (10) is part of a voltage power supply within the microtome (1).

## Revendications

1. Microtome équipé d'un dispositif de coupe monté de façon à pouvoir se déplacer sur un agencement de rails de guidage (4a, 4b), au moins un consommateur électrique (9) étant prévu au niveau du dispositif de coupe, ledit consommateur étant relié sur le plan électrique à une source de courant (10), la source de courant (10) étant reliée au consommateur électrique (9) via l'agencement de rails de guidage (4a, 4b), **caractérisé en ce que** l'agencement de rails de guidage comporte au moins deux rails de guidage (4a, 4b) s'étendant parallèlement l'un par rapport à l'autre et une différence de tension pouvant être appliquée entre les au moins deux rails de guidage (4a, 4b).

2. Microtome selon la revendication 1, **caractérisé en ce que** respectivement au moins une surface de contact électrique (5) est disposée sur les au moins deux rails de guidage (4a, 4b).

3. Microtome selon la revendication 1 ou 2, **caractérisé en ce qu'**au moins une région de contact est agencée au niveau du dispositif de coupe, ladite région étant en contact électrique avec les rails de guidage (4a, 4b).

4. Microtome selon l'une quelconque des revendications 1 à 3, **caractérisé en ce que** l'au moins un consommateur électrique (9) est un dispositif d'éclairage et/ou un dispositif de refroidissement et/ou un dispositif de chauffage et/ou une crinoline de sécurité pouvant être déplacée électriquement.

5. Microtome selon l'une quelconque des revendications 1 à 4, **caractérisé en ce que** le dispositif de coupe comporte au moins un porte-échantillons (2) et au moins un porte-lame (3).

6. Microtome selon la revendication 5, **caractérisé en ce que** l'au moins un consommateur électrique (9) est disposé dans l'au moins un porte-lame (3).

7. Microtome selon l'une quelconque des revendications 1 à 6, **caractérisé en ce que** la source de courant est disposée à l'intérieur du microtome.

8. Microtome selon la revendication 7, **caractérisé en ce que** la source de courant (10) fait partie d'une partie de réseau de tension prévue à l'intérieur du microtome (1).
